Europäisches Patentamt

European Patent Office

Office européen des brevets

(11) Publication number: **0 612 843 A1**

## EUROPEAN PATENT APPLICATION

(21) Application number: **93200494.8**

(22) Date of filing: **22.02.93**

(51) Int. Cl.5: **C11D 11/00**, C11D 17/06,
C11D 17/04, C11D 3/20,
C11D 7/08, B01J 2/28

(43) Date of publication of application:
**31.08.94 Bulletin 94/35**

(84) Designated Contracting States:
**AT BE CH DE DK ES FR GB GR IE IT LI LU MC NL PT SE**

(71) Applicant: **UNILEVER N.V.**
**P.O. Box 760**
**NL-3000 DK Rotterdam (NL)**

(72) Inventor: **Delwel, Francois c/o Unilever Res.VlaardingenLab.**
**Olivier van Noortlaan 120**
**NL-3133 AT Vlaardingen (NL)**
Inventor: **Gaudefroy, Charles Francois**
**Residence le Bol d'Air, 7,**
**Rue de Bol d'Air**
**F-59790 Ronchin (FR)**

(74) Representative: **Tan, Bian An, Ir. et al**
**Unilever N.V.**
**Patent Division**
**P.O. Box 137**
**NL-3130 AC Vlaardingen (NL)**

(54) **Granular acidic cleaners.**

(57) Granulation of an organic crystalline material, particularly organic acid material, in order to increase particle size and improve flow properties, is disclosed, by adding a fine powder and a liquid, such that powder and liquid together form an interstitial binding material, gluing the original crystals together, and drying the mixture to remove excess water, said binding material being formed from a combination of:

a) an inert, water-insoluble powdered material and an aqueous solution of a film-forming polymeric material; or

b) an inert water-soluble powdered material and water, or an aqueous solution of a film-forming polymeric material.

The granulates are used in formulating a granular acidic cleaner for cleaning dishwashing machine interior packed in a unit-dose twin compartment container comprising a granulated sulphamic acid in one compartment and citric acid (granulated or ungranulated) in the other compartment.

EP 0 612 843 A1

EP 0 612 843 A1

Field of the invention

This invention relates to granular acidic cleaners comprising a granulated acid material and method of preparing same.

Background of the invention

Organic acid materials, such as sulphamic acid, maleic acid and the like, are effective in removing lime-scale deposits from hard surfaces, such as porcelain, enamel and metal surfaces of e.g. bath-tubs and washing machines.

These acids are normally available as fine crystalline material having particle size of less than 1.0 mm, e.g. from about 0.5-0.6 mm. They often show poor flow properties, probably because of moisture at the surface. Granular products comprising sulphamic acid recommended for use in the cleaning of interiors of dishwashing machines are known from EP-A-0,256,148. Commercial products of this type are rather sticky, having an unsightly appearance unappealing to customers and have to be packed in plastic bags. Another drawback is that solid granular products comprising these acids are difficult to perfume. Being a crystalline material it is non-absorbing; the acid also tends to cause deterioration of the perfume resulting in off-odour and eventually total loss of perfume on storage. A further drawback is that upon mixing with citric acid which is normally coarse crystalline, the sulphamic acid and/or maleic acid tend to segregate in the pack.

It has now been found that these and other drawbacks which will be apparent in the further description, can be avoided or at least mitigated to a substantial degree, by granulatinq the fine crystalline acid material using a selected group of binding materials.

Summary of the invention

In a first aspect, the invention provides a process for granulating an organic crystalline material in order to increase particle size and improve flow properties, by adding a fine powder and a liquid, such that powder and liquid together form an interstitial binding material, gluing the original crystals together, and drying the mixture to remove excess water, said binding material being formed from a combination of:

a) an inert, water-insoluble powdered material and an aqueous solution of a film-forming polymeric material; or

b) an inert water-soluble powdered material and water, or an aqueous solution of a film-forming polymeric material.

Examples of inert, water-insoluble materials usable herein are starch, such as potato starch, aluminosilicate powder, such as zeolites. As film-forming polymeric materials can be named homo- and copolymers of polycarboxylic acids, such as the polyacrylates and especially copolymers of maleic acid (anhydride) and (meth)acrylic acid.

As examples of water-soluble powdered material can be named modified starch, gelatinized starch and malto-dextrin.

The inventive process is particularly applicable to crystalline organic acid materials such as sulphamic acid, maleic acid and citric acid, but can also be used to granulate other organic crystalline materials such as peroxyacid bleach precursors e.g. TAED.

In a second aspect, the invention relates to a granulated organic acid material, suitable for use in household and industrial cleaning products.

Detailed description of the invention and preferred embodiments

Whereas many particulate materials can be granulated with water or a polymer solution, this method cannot be applied to crystalline organic acid material, such as sulphamic acid. An explanation thereof may be that the crystalline sulphamic acid material is entirely free from pores, so that in attempting to granulate such material using a liquid to solid ratio in excess of 0.02 the mass becomes completely sluggish and "porridge-like" without building separate granules, because the binding forces are simply not strong enough.

Adding a water-insoluble powder such as starch to the water did not produce satisfactory granules.

On the other hand an inert water-soluble powdered material combined with water will form a sticky binder suitable for producing a strong and easily disintegrating granulate. The term water used herein refers to pure water as well as aqueous solutions of e.g. film-forming polymeric materials.

2

Likewise a polymer solution can function as a suitable binder only if combined with a water-insoluble or water-soluble powdered material

Hence the binders usable in the process according to the invention can be:

(a) a combination of water-soluble or water-insoluble powdered material and an aqueous solution of a film-forming polymer; or

(b) a combination of water-soluble powdered material and water with or without a film-forming polymer dissolved therein.

Specific examples of suitable binder combinations are:

- zeolite 4A + CP5*solution
- potato starch + CP5*solution
- modified starch + water
- malto-dextrin + water

Granulation of sulphamic acid and maleic acid using each of the above binder combinations has been found to result in increased particle size as well as improved flow properties i.e. DFR from 0 to > 120 ml/sec.

The granulation process can be carried out with any of the known granulation equipments such as a tilted pan, rotating drum, Schugi® flexomix, Lodige® recycler, Fukae® mixer etc. The drying step is preferably carried out in a fluid bed dryer.

In the inventive process the water-soluble or water-insoluble powdered material is used in an amount of from 3 to 50%, preferably from 5 to 20%, more preferably from 5 to 10% by weight, together with 97 to 50%, preferably from 95 to 80%, more preferably from 95 to 90% by weight of the organic acid material.

Preferably a premix of these solid materials is made onto which the aqueous liquid (either water or aqueous polymer solution) is sprayed to granulated the material. Spraying may be carried out at a liquid to solid ratio ranging from 5:95 to 15:85, preferably 5:95 about 10:90. If a polymer solution is used, the aqueous solution will contain from a bout 20 to 45%, preferably from about 25 to 30% by weight of polymer.

The mixture is then dried to obtain granules having a water content of not more than 3% by weight, preferably not more than 2% by weight, more preferably up to 1% by weight.

Accordingly the inventive granulates will have the following compositions (in % by weight):

| | | General | preferred | more preferred |
|---|---|---|---|---|
| organic acid | | 97 – 50 | 95 – 80 | 95 – 90 |
| water-soluble material | }(a) | 3 – 50 | 5 – 20 | 5 – 10 |
| polymer | } | 0 – 7 | 0 – 3 | 0 – 2.5 |

or

| | | General | preferred | more preferred |
|---|---|---|---|---|
| water-insoluble material | } | 3 – 50 | 5 – 20 | 5 – 10 |
| polymer | }(b) | 1 – 7 | 1 – 3 | 1 – 2.5 |
| water | } | 0 – 3 | 0 – 2 | 0 – 1 |

Suitable granulates according to the invention will preferably be of a size such that they contain not more than 7%, preferably 0% of particles > 2 mm; not more than 35%, preferably not more than 15% of particles > 1.5 mm; and not more than 15%, preferably not more than 10% of particles < 0.5 mm. Within this specification the granulate should preferably have a mean particle size according to Rosin-Rammler of from 1000-1400 micrometer, preferably 1250 micrometer.

The granulated organic acid material of the invention is especially suitable for use in the cleaning of dishwashing machines interiors, by which lime-scale and any soil debris as deposited on the interior surfaces of the washing machine, especially on the filters, heating elements and walls, in the course of time, are removed, leaving a clean and shiny appearance of the washing machine interior.

Such cleaning compositions are normally used at a frequency of twice a month, monthly or bi-monthly depending on the intensity of the use of the dishwashing machine, wherein the machine is operated at the

* CP5 is Sokalan CP5® ex BASF (a maleic acid/acrylic acid copolymer).

usual washing cycle but unloaded.

The acidic cleaner composition of the invention is conveniently presented in unit dose packs containing from about 50 to about 200 grams, preferably from 100 to about 150 grams, for single wash use.

Preferred acidic cleaners will comprise a combination of granulated strong acid material (e.g. maleic acid or sulphamic acid) and a weaker organic acid, such as adipic acid, succinic acid, glutaric acid or preferably citric-acid, either granulated or non-granulated, depending on its crystalline particle size. If only a strong acid is used a dosage of from 50 to about 100 gram will generally be sufficient for a single wash use, whereas a combination of strong organic acid and weaker organic acid, e.g. sulphamic acid and citric acid, will require a higher product dosage and may be presented in unit dose packs of from about 100 to 200 grams of product, preferably from 100 to about 150 grams. The strong organic acid and the weaker organic acid may be used in a weight ratio of from about 1:1 to 1:3, preferably from 1:2.0 to 1:2.5.

Usually and preferably the composition will also include a minor amount e.g. from 0.1 to 5% by weight of a low- to non-foaming surfactant, particularly a nonionic surfactant, to aid in detergency resulting in a non-spotting and smooth clean surface. Nonionic surfactants usable herein are those known compounds as have been used in machine dishwashing compositions. Examples of such suitable nonionic surfactant compounds are the ethoxylated alkyl phenols, preferably ethoxylated straight chain primary and secondary alcohols of the Plurafac® RA series ex Eurane Company; of the Lutensol® LF series ex BASF Company; of the Triton® DF series ex Rohm & Haas Company; of the Synperonic® LF series ex ICI Company.

Another optional but also preferable ingredient is perfume which will provide the interior of the washing machine after cleaning not only a clean appearance but also a fresh odour.

Preferably the perfume is incorporated in encapsulated form as micro-capsules. The technique of perfume encapsulation and preparing micro-capsules is well-known, (see e.g. US 5,066,419) and any of these techniques can be used to provide the encapsulated perfume for use in this invention.

The invention comprises in one embodiment a cleaning composition comprising a granulated strong organic acid material and a weak organic acid in a unit dose pack of from 50-200 grams.

In a more preferred embodiment the granulated strong organic acid material and the weaker organic acid are separately packed, so as to enable using the acids in the most efficient way i.e. the weak acid (e.g. citric acid) in the pre-wash cycle and the stronger acid (e.g. sulphamic acid) in the main wash cycle.

A most convenient way of presenting such product is a unit-dose twin-compartment pack, with one part containing the strong acid and the other part containing the weaker acid, in the appropriate weight ratio but separated from each other.

In a still more preferred embodiment the invention therefore provides a unit-dose twin-compartment pack containing a composition comprising about 50-100 grams of weak organic acid e.g. citric acid (granulated or ungranulated) and from 0.5-3 grams of a nonionic surfactant in one compartment and a composition comprising from 25-50 grams granulated strong organic acid e.g. sulphamic acid and perfume in the other compartment, the perfume preferably being in the form of micro-encapsulates.

The amount of perfume usable herein may be varied at will and is not critical. The man skilled in the art will have no problem in selecting the proper amount based on individual and/or customers need an desire.

One specifically preferred embodiment is a unit-dose twin-compartment pack containing in one compartment a composition comprising about 95-98 grams of citric acid and about 2 grams of a nonionic surfactant, and in the other compartment a composition comprising about 35-45 grams of granulated sulphamic acid and micro-encapsulated perfume.

An advantage of this unit dose twin-compartment packed product is the convenience of dosing, i.e. the granulated sulphamic acid composition is poured in the dispenser cup of the washing machine and the citric acid composition is poured in the interior of the washing machine. The dish washing machine is then operated unloaded at complete wash-cycle programme including pre-wash, main-wash, rinse-step and drying step, wherein the weaker acid is active in the pre-wash step and the stronger acid is active in the main-wash step, providing maximum cleaning, hygiene and olfactory impacts.

Another advantage of the inventive unit-dose twin-compartment pack is that of appealing free-flowing product appearance.

Still another advantage is that the compositions need not be packed in inner plastic bags, but can be contained in simple twin-compartment carton packs without the problems of being sticky and bleeding, thus avoiding the use of environmentally unfriendly plastic material.

Preparation of perfume microcapsules

30 grams of perfume/wax mix (perfume/wax m.p. 45/50°C; 25 g/5 g) is emulsified in 350 grams of warm aqueous solution containing 5 grams of gelatine and 12 grams of an acrylic acid/maleic acid copolymer CP5® ex BASF (40% a.m).

The mixture is stirred while maintaining it at 60°C (i.e. above the melting point of wax). The pH was approximately neutral.

Coacervation occurred when the pH is lowered with diluted acetic-acid (to approx. 4.2). This causes the coacervate to gather around the oil droplets, enclosing them and forming preliminary microcapsules.

When the system is cooled, only the coacervate portion is gelled and the form is fixed. Formalin or glutaraldehyde is then added (curing treatment). The mixture is then stirred during one hour.

The resulting microcapsules can be converted to a dry powder by fluid bed treatment or lyophilisation. Composition of perfume micro-encapsulate:

| Wall: | 12.5% gelatin/12.5% CP5 |
|-------|-------------------------|
| Core: | 50% perfume/25% wax     |

In preparing perfume micro-capsules wax is not essential but is preferably used to provide body to the core.

Micro capsules obtained by the same preparation method but starting from 30 gram of perfume without wax will thus have the following composition:

| Wall: | 12.5% gelatin/12.5% CP5 |
|-------|-------------------------|
| Core: | 75% perfume.            |

In general the wall: core weight ratio may vary within a range of 5:95 to 70:30; a preferred ratio is about 25:75. The wall may comprise from 10-9-% of gelatin and from 90-10% of polymer. The core may comprise 100% perfume or a perfume/wax mixture in a ratio up to 40:60, preferably in a ratio of from 4:1 to 2:1.

## Claims

1. A process for granulating an organic crystalline material by adding a fine powder and a liquid, such that powder and liquid together form an interstitial binding material, gluing the original crystals together, and drying the mixture to remove excess water said binding material being formed from a combination of:
   a) an inert, water-insoluble powdered material and an aqueous solution of a film-forming polymeric material; or
   b) an inert, water-soluble powdered material and water, or an aqueous solution of a film-forming polymeric material.

2. A process according to claim 1, wherein said organic crystalline material is an organic acid.

3. A process according to claim 2, wherein said organic acid is selected from sulphamic acid, maleic acid and citric acid.

4. A process according to claims 1-3, wherein said inert water-insoluble powdered material is selected from starch and aluminosilicate powder.

5. A process according to claims 1-3, wherein said inert water-soluble powdered material is selected from modified starch, gelatinized starch and malto-dextrin.

6. A process according to claims 1-5, wherein aid polymeric material is a homo- or copolymer of polycarboxylic acids.

7. A process according to claim 6, wherein said polymeric material is a copolymer of maleic acid (anhydride) and (meth)acrylic acid.

8. A granulated organic acid material obtainable by the process of claim 1-7, comprising from 97-50% by weight of organic acid, from 3-50% by weight of water-soluble material, and from 1-7% by weight of polymeric material.

9. A granulated organic acid material obtainable by the process of claims 1-7, comprising from 97-50% by weight of organic acid, from 3-50% by weight of water-soluble material, and from 0-7% by weight of polymeric material.

10. Unit-dose pack containing from 50-200 grams of an acidic cleaner composition comprising a granulated organic acid according to claims 8 and 9.

11. Unit-dose according to claim 9, which is a twin compartment pack containing a first composition comprising about 50-100 grams of weak organic acid, such as citric acid, and 0.5-3 grams of a nonionic surfactant in one compartment, and a composition comprising form 25-50 grams of granulated strong organic acid, such as sulphamic acid, and a perfume.

12. Unit-dose pack according to claim 11, wherein said perfume is present in the form of micro-encapsulates.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 323 659 (UNILEVER)<br>* the whole document *<br>--- | 1,5-7 | C11D11/00<br>C11D17/06<br>C11D17/04 |
| X | EP-A-0 468 824 (WARWICK INTERNATIONAL GROUP)<br>* the whole document *<br>--- | 1,5-7 | C11D3/20<br>C11D7/08<br>B01J2/28 |
| X | DATABASE WPI<br>Derwent Publications Ltd., London, GB;<br>AN 77-22423Y [13]<br>& JP-A-52 019 177 (MEIJI SEIKA KK) 14 February 1977<br>* abstract *<br>--- | 1 | |
| A | PATENT ABSTRACTS OF JAPAN<br>vol. 015, no. 001 (C-0793)1990<br>& JP-22 55 800 ( KAO CORP. ) 16 October 1990<br>* abstract *<br>--- | 1-3 | |
| A | DATABASE WPIL<br>Derwent Publications Ltd., London, GB;<br>AN 92-028855 [04]<br>& JP-A-3 275 622 (TEISAN SEIYAKU KK) 6 December  1991<br>* abstract *<br>--- | 1,2 | **TECHNICAL FIELDS SEARCHED (Int. Cl.5 )**<br><br>C11D<br>B01J |
| D,A | EP-A-0 256 148 (J.A.BENCKISER GMBH.)<br>* claims 1,5; examples 1,2 *<br>--- | 1-3,8 | |
| A | GB-A-2 235 206 (UNILEVER)<br>* claims 1-4 *<br>--- | 10,11 | |
| A | GB-A-2 025 450 (AKZO)<br>* page 2, line 36 - line 52; claim 1 * | 8,10,11 | |

-----

The present search report has been drawn up for all claims

| Place of search | Date of completion of the search | Examiner |
|---|---|---|
| THE HAGUE | 03 AUGUST 1993 | SERBETSOGLOU A. |